# EUROPÄISCHE PATENTANMELDUNG

(11) **EP 4 475 422 A1**
(43) Veröffentlichungstag der Anmeldung: **11.12.2024**
(21) Anmeldenummer: 23178007.3
(22) Anmeldetag: 07.06.2023
(51) Int. Cl.: H02M 7/493, H02M 1/32, H02M 1/36, H02M 7/162, H02M 7/17, H02H 7/12

(54) **SCHALTUNGSANORDNUNG FÜR EINEN DC-VERBUND**

(71) Anmelder: KEB Automation KG, 32683 Barntrup (DE)
(72) Erfinder: Homeier, Julien, 31848 Bad Münder (DE); Hertel, Willi, 32657 Lemgo (DE)
(74) Vertreter: Brinkmann & Partner

(57) **Zusammenfassung**

Die Erfindung betrifft eine Schaltungsanordnung für einen DC-Verbund mit mehreren Wechselrichtern (3, 47) und einem oder mehreren Gleichrichter(n) (2), wobei jedem Wechselrichter (3, 47) ein Zwischenkreis (4, 48) zugeordnet ist, mit einer Mehrzahl von Schutzschaltungen (13), wobei je Zwischenkreis (4, 48) eine Schutzschaltung (13) vorgesehen ist, und mit einer Abschaltvorrichtung (36), die dazu ausgebildet ist, einen Stromfluss in die Zwischenkreise (4, 48) zu unterbrechen, wobei die Abschaltvorrichtung (36) gleichrichterseitig eine erste Schalteinrichtung (37) und wechselrichterseitig eine zweite Schalteinrichtung (41) aufweist, wobei die zweite Schalteinrichtung (41) dazu ausgebildet ist, eine Betätigung der ersten Schalteinrichtung (37) zu bewirken, und wobei die erste Schalteinrichtung (37) dazu ausgebildet ist, einen Stromfluss in die Zwischenkreise (4, 48) zu unterbrechen.

## Beschreibung

Die Erfindung betrifft eine Schaltungsanordnung für einen DC-Verbund mit mehreren Wechselrichtern und einem oder mehreren Gleichrichter(n), wobei jedem Wechselrichter ein Zwischenkreis zugeordnet ist.

DC-Verbunde der eingangs genannten Art sind aus dem Stand der Technik bekannt. Gemäß einer ersten Ausführungsform kann ein DC-Verbund mehrere miteinander parallelverschaltete Frequenzumrichter aufweisen, wobei ein Frequenzumrichter typischerweise über einen Gleichrichter und einen Wechselrichter verfügt, die mittels eines Zwischenkreises miteinander verschaltet sind. Gemäß einer zweiten Ausführungsform kann ein DC-Verbund über einen Frequenzumrichter und mehrere Wechselrichter verfügen, wobei jedem Wechselrichter ein Zwischenkreis zugeordnet ist und die Wechselrichter parallel zum Zwischenkreis des Frequenzumrichters geschaltet sind.

Im bestimmungsgemäßen Verwendungsfall dient ein DC-Verbund dem Betreiben einer Mehrzahl von elektrischen Maschinen, wobei typischerweise jedem Wechselrichter des DC-Verbundes eine elektrische Maschine zugeordnet ist, d. h. die elektrische Maschine über den zugeordneten Wechselrichter mit Strom versorgt wird. Der Vorteil eines solchen DC-Verbundes besteht insbesondere darin, dass im generatorischen Betrieb eines der an den DC-Verbund angeschlossenen elektrischen Maschinen die zurückfließende Energie in einen Zwischenkreis eines anderen Wechselrichters eingespeist werden kann, sodass die aus einer elektrischen Maschine zurückfließende elektrische Energie zum Betrieb einer anderen an den DC-Verbund angeschlossenen elektrischen Maschine genutzt werden kann.

Die in einem DC-Verbund eingesetzten Zwischenkreise verfügen typischerweise jeweils über zwei in Reihe geschaltete Zwischenkreiskondensatoreinheiten. Dabei können je Zwischenkreiskondensatoreinheit mehrere in Reihe und/oder parallel geschaltete Zwischenkreiskondensatoren vorgesehen sein.

Als Zwischenkreiskondensatoren eignen sich insbesondere Elektrolytkondensatoren. Bei Elektrolytkondensatoren handelt es sich um gepolte Kondensatoren, deren Anodenelektrode aus einem Metall wie z. B. Aluminium, Tantal oder Niob besteht, auf dem eine äußerst dünne, elektrisch isolierende Schicht als Dielektrikum aufgebracht ist. Die Kathodenelektrode ist durch den Elektrolyten gebildet, der entweder in flüssiger Form als lonenleiter oder in fester Form als Elektronenleiter ausgebildet ist.

Grundsätzlich besteht bei elektrischen Bauteilen immer die Gefahr, dass sie mit steigender Lebensdauer oder durch andere Einflüsse einen Effekt aufweisen und einen Kurzschluss bilden. Dies ist insbesondere bei der Reihenschaltung von Elektrolytkondensatoren problematisch. Denn sollte ein Kondensator in der Reihenschaltung einen Kurzschluss bilden, führt dies zu einem Spannungsanstieg an den nicht defekten Kondensatoren der Reihenschaltung. Steigt nun die Spannung an einem der nicht defekten Kondensatoren über einen kondensatorspezifischen Maximalwert, so hat dies die Zerstörung des bis dahin noch nicht defekten Kondensators zur Folge, was im Falle eines Elektrolytkondensators zu einem explosionsartigen Bersten führen kann. Dabei wird die Berstkraft unter anderem von der Höhe der Überspannung, dem zur Verfügung stehenden Strom und/oder der Bauform und dem Zustand des Kondensators bestimmt.

Insbesondere bei 400 V-Frequenzumrichtern besteht die vorerläuterte Berstproblematik, da hier Elektrolytkondensatoren als Glättungskondensatoren verwendet werden, die einer Netzspannungsgleichrichterschaltung nachgeschaltet sind. Im kritischen Berstfall wird der Strom vom Versorgungsnetz in die Kondensatoren allein durch die Impedanzen des Versorgungsnetzes und der Gleichrichterschaltung eingestellt. Da diese Impedanzen in der Regel sehr gering sind, können sehr hohe Ströme entstehen, was zum gefährlichen Bersten der Elektrolytkondensatoren führen kann.

Um diesem Problem zu begegnen, ist mit der EP 3 490 129 B1 bereits eine Schutzschaltung vorgeschlagen worden, die im Kurzschlussfall ein Stromlosschalten eines Zwischenkreises eines Frequenzumrichters bewirkt.

Die aus der EP 3 490 129 B1 vorbekannte Schutzschaltung ist allerdings auf Zwischenkreise eines DC-Verbundes nicht ohne Weiteres übertragbar. Denn bei einem DC-Verbund werden mehrere Wechselrichter von einem oder mehreren Gleichrichter(n) versorgt, sodass es für ein Stromlosschalten im Fehlerfall je Zwischenkreis bzw. Wechselrichter einer entsprechenden Sicherung oder eines gleichwertig schnellschaltenden Elements bedarf. Das Vorsehen entsprechender Sicherungen oder gleichwertig schnellschaltender Elemente je Zwischenkreis ist jedoch aufwändig und nicht zuletzt auch aus betriebswirtschaftlicher Sicht von Nachteil.

Es ist deshalb die der Erfindung zugrundeliegende **Aufgabe,** eine Schaltungsanordnung für einen DC-Verbund vorzuschlagen, die bei gleichzeitiger Betriebswirtschaftlichkeit einen verbesserten Personen- und Sachschutz ermöglicht.

Zur **Lösung** dieser Aufgabe wird mit der Erfindung vorgeschlagen eine Schaltungsanordnung für einen DC-Verbund mit mehreren Wechselrichtern und einem oder mehreren Gleichrichter(n), wobei jedem Wechselrichter ein Zwischenkreis zugeordnet ist, mit einer Mehrzahl von Schutzschaltungen, wobei je Zwischenkreis eine Schutzschaltung vorgesehen ist, und mit einer Abschaltvorrichtung, die dazu ausgebildet ist, einen Stromfluss in die Zwischenkreise zu unterbrechen, wobei die Abschaltvorrichtung gleichrichterseitig eine erste Schalteinrichtung und wechselrichterseitig eine zweite Schalteinrichtung aufweist, wobei die zweite Schalteinrichtung dazu ausgebildet ist, eine Betätigung der ersten Schalteinrichtung zu bewirken, und wobei die erste Schalteinrichtung dazu ausgebildet ist, einen Stromfluss in die Zwischenkreise zu unterbrechen.

Die erfindungsgemäße Schaltungsanordnung dient in vorteilhafter Weise dazu, im Falle eines in einem Zwischenkreis des DC-Verbundes auftretenden Fehlers einen Stromfluss in sämtlichen Zwischenkreisen des DC-Verbundes zu unterbrechen. Es ist mithin sichergestellt, dass ein Stromlosschalten sämtlicher Zwischenkreise des DC-Verbundes erfolgt, wenn nur in einem der Zwischenkreise ein Fehlerfall auftritt.

Zwecks Fehlerdetektion ist je Zwischenkreis eine Schutzschaltung vorgesehen. Insbesondere die Detektion eines Kurzschlusses ist so je Zwischenkreis ermöglicht.

Die Abschaltvorrichtung der erfindungsgemäßen Schaltungsanordnung verfügt über erste Schalteinrichtungen sowie über zweite Schalteinrichtungen, wobei eine erste Schalteinrichtung gleichrichterseitig und eine zweite Schalteinrichtung wechselrichterseitig vorgesehen ist. Im Fehlerfall erfolgt mittels der je Zwischenkreis vorgesehenen Schutzschaltung eine Betätigung der diesem Zwischenkreis wechselrichterseitig zugeordneten zweiten Schalteinrichtung. Diese zweite Schalteinrichtung ist dazu ausgebildet, eine Betätigung der ersten Schalteinrichtung zu bewirken. Im Ergebnis kann so im Fehlerfall infolge der Betätigung der ersten Schalteinrichtung gleichrichterseitig ein Stromfluss in die Zwischenkreise unterbrochen werden. Die zweiten Schalteinrichtungen sind allesamt gleichermaßen jeweils dazu ausgebildet, eine Betätigung der ersten Schalteinrichtung bewirken zu können. Die erfindungsgemäße Schaltungsanordnung stellt so sicher, dass es im Fehlerfall zur Betätigung wenigstens einer der mehreren zweiten Schalteinrichtungen kommt. Da sämtliche zweite Schalteinrichtungen gleichermaßen dazu ausgebildet sind, die erste Schalteinrichtung zu betätigen, erfolgt im Fehlerfall unabhängig vom Zwischenkreis, in dem ein Fehler beispielsweise durch Kurzschluss auftritt, eine Betätigung der gleichrichterseitigen ersten Schalteinrichtung, wodurch dann der Stromfluss in sämtliche Zwischenkreise unterbrochen wird.

Durch die erfindungsgemäße Schaltanordnung ist mithin eine Art Fehlerkette gegeben, womit Schutzschaltungen der Zwischenkreise genutzt werden können, um einen DC-Verbund ohne zusätzliche Sicherungen und Schutzschalter sicher betreiben zu können. Die erfindungsgemäße Ausgestaltung erlaubt damit einen Personen- und Sachschutz bei gleichzeitiger betriebswirtschaftlicher Umsetzbarkeit.

Von Vorteil der erfindungsgemäßen Schaltungsanordnung ist ferner, dass durch das Abschalten eines Fehlers in einem Zwischenkreis unabhängig vom fließenden Strom die Energiezufuhr in den DC-Verbund schneller unterbrochen wird, als dies bei der Verwendung von Sicherungen und/oder gleichwertigen Schutzschaltern der Fall ist. Die erfindungsgemäße Ausgestaltung minimiert mithin das Schadenspotenzial.

Die erfindungsgemäße Schaltungsanordnung dient in vorteilhafter Weise einer Verschaltung der je Zwischenkreis vorgesehenen Schutzschaltungen. Dies erbringt den Vorteil, dass es abhängig von der Ausstattung einzelner Zwischenkreise mit Schutzschaltungen und der Gesamtkapazität im DC-Verbund keinerlei DC-Sicherungen bedarf, und dies bei gleichzeitiger Sicherstellung des geforderten Personen- und/oder Sachschutzes auch im Kurzschlussfall.

Gemäß einem weiteren Merkmal der Erfindung ist vorgesehen, dass die Abschaltvorrichtung je Gleichrichter eine erste Schalteinrichtung aufweist, wobei ein Gleichrichter über Thyristoren und eine damit zusammenwirkende Thyristorenansteuerung verfügt und wobei die erste Schalteinrichtung eines Gleichrichters die Thyristorenansteuerung des Gleichrichters und eine zu einem der Thyristoren des Gleichrichters parallel an dessen Phase geschaltete Vorladeschaltung aufweist.

Im DC-Verbund werden ein Wechselrichter oder mehrere Wechselrichter von einem Gleichrichter oder von mehreren Gleichrichtern mit elektrischer Energie versorgt. Erfindungsgemäß weist die Abschaltvorrichtung erste Schalteinrichtungen auf, und zwar je Gleichrichter eine erste Schalteinrichtung. Verfügt der DC-Verbund mithin über nur einen Gleichrichter, so ist hinsichtlich der Abschaltvorrichtung auch nur eine erste Schalteinrichtung vorgesehen. Sind im DC-Verbund indes mehrere Gleichrichter vorgesehen, so weist auch die Abschaltvorrichtung mehrere erste Schalteinrichtungen auf, und zwar je Gleichrichter eine erste Schalteinrichtung.

Ein Gleichrichter verfügt in an sich bekannter Weise über Thyristoren und eine damit zusammenwirkende Thyristorenansteuerung. Diese Thyristorenansteuerung ist Bestandteil der ersten Schalteinrichtung, d. h. die je Gleichrichter vorgesehene Schalteinrichtung weist die Thyristorenansteuerung des zugeordneten Gleichrichters auf.

Zur ersten Schalteinrichtung gehört ferner eine Vorladeschaltung, und zwar die Vorladeschaltung des der ersten Schalteinrichtung zugeordneten Gleichrichters. Dabei ist die Vorladeschaltung zu einem der Thyristoren des Gleichrichters parallel an dessen Phase geschaltet. Im Ergebnis weist die je Gleichrichter vorgesehene erste Schalteinrichtung mithin die Thyristorenansteuerung des Gleichrichters sowie eine Vorladeschaltung auf, die zu einem der Thyristoren des Gleichrichters parallel an dessen Phase geschaltet ist.

Im bestimmungsgemäß Verwendungsfall führt der Energiefluss vom Versorgungsnetz über den Gleichrichter in den oder die daran angeschlossenen Zwischenkreise und von dort aus über die jeweiligen Wechselrichter zu den jeweils daran angeschlossenen Verbrauchern. Die Thyristoren des Gleichrichters sind in diesem Fall angesteuert, um den Energiefluss über die Gleichrichterschaltung in den oder die Zwischenkreise zu ermöglichen.

Parallel zu einem Thyristor, der an einer der Phasen des Versorgungsnetzes angeschlossen ist, ist der Vorladezweig der Vorladeschaltung geschaltet. Dabei übernimmt die Vorladeschaltung bei einer Einschaltung die Spannungsvorladung des Zwischenkreises oder der Zwischenkreise. Bei hinreichender Spannungshöhe im Zwischenkreis oder den Zwischenkreisen werden die Thyristoren eingeschaltet. Dabei ist es Sinn und Zweck der Vorladeschaltung, größere Ströme im Versorgungsnetz beim Einschalten zu verhindern.

Wird nun in vorbeschriebener Weise ein Fehler in dem Zwischenkreis oder in einem der Zwischenkreise beispielsweise infolge eines Kurzschlusses festgestellt, so erfolgt je Gleichrichter mittels der zugehörigen ersten Schalteinrichtung der Abschaltvorrichtung eine Abschaltung der Thyristoren des Gleichrichters. Die erste Schalteinrichtung verfügt zu diesem Zweck über eine Thyristorenansteuerung, d. h. über Mittel zur Deaktivierung eines die Thyristoren des zugeordneten Gleichrichters ansteuernden Signals. Sobald die drei an die jeweiligen Phasen angeschlossenen Thyristoren gesperrt sind, ist der Stromfluss über den zugehörigen Gleichrichter an den Zwischenkreis oder die Zwischenkreise unterbunden. Es stellt sich dann ein Stromfluss über die Vorladeschaltung ein, die ebenfalls Teil der zugehörigen ersten Schalteinrichtung ist.

Die Vorladeschaltung verfügt gemäß einem weiteren Merkmal der Erfindung über eine Diode und einen hierzu in Reihe geschalteten temperaturabhängigen Widerstand, vorzugsweise ein PTC-Glied.

Der temperaturabhängige Widerstand der Vorladeschaltung wird mit zunehmend werdenden Stromfluss hochohmig. Dies ist im Fehlerfall beispielsweise eines Kurzschlusses der Fall. Sobald also der Widerstand der Vorladeschaltung infolge eines hohen Stromflusses hochohmig geworden ist, stellt sich eine Trennung des Zwischenkreises oder der Zwischenkreise vom Versorgungsnetz ein. Es kann somit kein Energiefluss mehr stattfinden, und zwar weder über die Thyristoren, noch über die Vorladeschaltung, womit ein weiterer Stromfluss in den Zwischenkreis oder die Zwischenkreise unterbunden ist. Der Zwischenkreis oder die Zwischenkreise bzw. deren Baukomponenten sind mithin vor einer weiteren Zerstörung geschützt. Der temperaturabhängige Widerstand der Vorladeschaltung ist mithin so auszulegen, dass eine Stromflussunterbrechung in den Zwischenkreis oder die Zwischenkreise stattfindet, bevor es zu einer Zerstörung des Zwischenkreises oder der Zwischenkreise bzw. deren Baukomponenten, wie insbesondere der Kondensatoren kommen kann.

Von besonderem Vorteil der vorbeschriebenen Konstruktion ist, dass die Abschaltvorrichtung bzw. die je Gleichrichter vorgesehene erste Schalteinrichtung die ohnehin für eine bestimmungsgemäße Vorladung des Zwischenkreises oder der Zwischenkreise je Gleichrichter vorgesehene Vorladeschaltung nutzt, um im Fehlerfall, d. h. insbesondere im Falle eines Kurzschlusses eine sofortige Trennung des Zwischenkreises oder der Zwischenkreise vom Versorgungsnetz zu bewerkstelligen. Damit kommt der je Gleichrichter vorgesehenen Vorladeschaltung im Fehlerfall eine Schutzfunktion zu. Dabei ist in diesem Zusammenhang ferner von Vorteil, dass der temperaturabhängige Widerstand der Vorladeschaltung im hochohmigen Zustand ein erneutes, unbeabsichtigtes Einschalten bei einem bestehenden Fehlerfall verhindert, was zusätzliche Sicherheit für den Anwender schafft.

Gemäß einem weiteren Merkmal der Erfindung ist vorgesehen, dass an der Thyristorenansteuerung einer ersten Schalteinrichtung unter Zwischenschaltung einer "und"-Verknüpfung ein externes Freigabesignal sowie ein Steuersignal anliegen.

Im bestimmungsgemäßen Verwendungsfall sind sowohl das Steuersignal als auch das Freigabesignal auf "high", d. h. "1" geschaltet. Im Ergebnis der "und"-Verknüpfung bleiben die Thyristoren über die Thyristorenansteuerung angesteuert und es findet ein Stromfluss in den Zwischenkreis oder die Zwischenkreise statt. Sobald indes eines der beiden Signale, d. h. entweder das Steuersignal oder das externe Freigabesignal auf "low", d. h. "0" geschaltet wird, ergibt sich infolge der "und"-Verknüpfung eine ausbleibende Ansteuerung der Thyristorenansteuerung mit der Folge, dass es zu einer Abschaltung der in Wirkverbindung mit der Thyristorenansteuerung stehenden Thyristoren kommt. Sobald also eines der beiden Signale auf "low" geschaltet wird, erfolgt in vorbeschriebener Weise eine Abschaltung des zugehörigen Gleichrichters mit der Folge, dass ein Stromfluss in den angeschlossenen Zwischenkreis bzw. in die angeschlossenen Zwischenkreise unterbleibt.

Gemäß einem weiteren Merkmal der Erfindung ist vorgesehen, dass das Steuersignal von der Schutzschaltung des Zwischenkreises bereitgestellt ist, der dem Gleichrichter zugeordnet ist, an dessen Thyristorenansteuerung das Steuersignal anliegt. Das Steuersignal stellt mithin eine direkte Wirkverbindung zwischen einem Gleichrichter und der diesem Gleichrichter unmittelbar zugeordneten Schutzschaltung des zugehörigen Zwischenkreises her.

Gemäß einem weiteren Merkmal der Erfindung ist vorgesehen, dass das Freigabesignal von einem Signalgeber bereitgestellt ist. Das Freigabesignal ist mithin als Dauersignal ausgelegt, das stets auf "high" geschaltet ist, es sei denn, es tritt ein Fehler in einem der Zwischenkreise auf. In diesem Fall wird die Verbindung zum Signalgeber unterbrochen, sodass infolge eines ausbleibenden Signals das Freigabesignal auf "low" geschaltet ist.

Bei dem Signalgeber kann es sich gemäß einem weiteren Merkmal der Erfindung um eine dauerhafte Stromversorgung, beispielsweise in Form eines 24V-Netzteils oder eines Akkumulators handeln.

Der Signalgeber ist gemäß einem weiteren Merkmal der Erfindung unter Zwischenschaltung einer Signalleitung an die "und"-Verknüpfung einer ersten Schalteinrichtung angeschlossen. Die Signalleitung ist dabei durch sämtliche Zwischenkreise bis zur zugehörigen ersten Schalteinrichtung durchgeschleift. Dabei sind in die Signalleitung die zweiten Schalteinrichtungen integriert, wobei je Zwischenkreis eine solche zweite Schalteinrichtung vorgesehen ist.

Die vorbeschriebene Konstruktion erlaubt es in einfacher Weise, dass eine Abschaltung in sämtliche Zwischenkreise unmittelbar erfolgt, wenn nur eine der mehreren zweiten Schalteinrichtungen die durch die Signalleitung gebildete Fehlerkette unterbricht, d. h. das anliegende Freigabesignal unterbrochen wird, an der "und"-Verknüpfung der zugehörigen ersten Schalteinrichtung mithin eine Umschaltung von "high" auf "low" stattfindet. In diesem Fall kommt es zu einer sofortigen Abschaltung des zugehörigen Gleichrichters mit der Folge, dass die daran angeschlossenen Zwischenkreise vom Stromnetz unmittelbar getrennt werden. Dabei spielt es keine Rolle, in welchem der Zwischenkreise ein Fehler auftritt. Über die erfindungsgemäß vorgesehene Fehlerkette ist in jedem Fall sichergestellt, dass ein Stromfluss in sämtliche Zwischenkreise unterbrochen wird.

Es können schaltungstechnisch zwei unterschiedliche Varianten vorgesehen sein. Gemäß einer ersten Alternative weist die Abschaltvorrichtung bei parallelgeschalteten Frequenzumrichtern je Wechselrichter eine zweite Schalteinrichtung auf. Alternativ hierzu kann vorgesehen sein, dass die Abschaltvorrichtung bei zu einem Zwischenkreis eines Frequenzumrichters parallelgeschalteten Wechselrichtern je parallelgeschaltetem Wechselrichter eine zweite Schalteinrichtung aufweist.

Eine zweite Schalteinrichtung verfügt gemäß einem weiteren Merkmal der Erfindung über ein Relais und eine Relaisansteuerung. Bei geschlossenem Relais ist die zur zugehörigen ersten Schalteinrichtung führende Signalleitung geschlossen, sodass das vom Signalgeber abgegebene Signal als Freigabesignal an der "und"-Verknüpfung der ersten Schalteinrichtung anliegt. Bei ebenfalls "high" geschaltetem Steuersignal findet mithin eine Ansteuerung der Thyristoren des zugehörigen Gleichrichters statt, sodass ein Stromfluss in die angeschlossenen Zwischenkreise erfolgt. Schaltet nun im Fehlerfall ein Relais einer der zweiten Schalteinrichtungen um, so wird die zur zugehörigen ersten Schalteinrichtung führende Signalleitung unterbrochen, und dies mit der Folge, dass das Freigabesignal auf "low", d. h. "0" umschaltet. In der Konsequenz unterbleibt eine Thyristorenansteuerung im zugehörigen Gleichrichter, sodass es in schon vorbeschriebener Weise zu einer Stromlosschaltung sämtlicher an den Gleichrichtern angeschlossene Zwischenkreise kommt.

Zur Ansteuerung der Relais ist je zweiter Schalteinrichtung eine Relaisansteuerung vorgesehen. Dabei steht die Relaisansteuerung in Wirkverbindung mit der Schutzschaltung des jeweils zugehörigen Zwischenkreises. Wenn also in einem der Zwischenkreise über die zugehörige Schutzschaltung ein Fehler im zugehörigen Zwischenkreis detektiert wird, erfolgt unmittelbar eine Schaltung des Relais der zugehörigen zweiten Schalteinrichtung mit der Folge, dass es in vorbeschriebener Weise zu einer Stromlosschaltung sämtlicher Zwischenkreise kommt. Gemäß einem weiteren Merkmal der Erfindung ist mithin vorgesehen, dass an einer Relaisansteuerung ein Steuersignal anliegt, wobei das Steuersignal von der Schutzschaltung des Zwischenkreises bereitgestellt ist, der dem Wechselrichter der Relaisansteuerung zugeordnet ist. Im Fehlerfall besorgt mithin die Schutzschaltung des Zwischenkreises eine Relaisansteuerung der diesem Zwischenkreis zugeordneten zweiten Schalteinrichtung.

Mit der Erfindung wird zur Lösung der vorstehenden Aufgabe ferner vorgeschlagen eine Frequenzrichter-Anordnung mit mehreren Wechselrichtern und einem oder mehreren Gleichrichter(n), wobei jedem Wechselrichter ein Zwischenkreis zugeordnet ist, wobei die Frequenzumrichter-Anordnung erfindungsgemäß durch eine Schaltungsanordnung der vorbeschriebenen Art verfügt. Eine solche Frequenzumrichter-Anordnung verfügt über die schon vorbeschriebenen Vorteile.

Des Weiteren wird mit der Erfindung vorgeschlagen ein Verfahren zur Stromlosschaltung einer Frequenzumrichter-Anordnung der vorbeschriebenen Art, bei dem mittels einer Schutzschaltung ein Fehler in einem der Zwischenkreise detektiert wird und bei dem alsdann mittels der Abschaltvorrichtung ein Stromfluss in sämtliche Zwischenkreise unterbrochen wird. Die erfindungsgemäße Verfahrensdurchführung erbringt die schon vorstehend anhand der Schaltungsanordnung beschriebenen Vorteile.

Weitere Merkmale und Vorteile der Erfindung ergeben sich aus der nachfolgenden Beschreibung anhand der Figuren. Dabei zeigen
- Fig. 1: in einer schematischen Prinzipdarstellung eine erfindungsgemäße Schaltungsanordnung;
- Fig. 2: in einer vereinfachten Darstellung die Schaltungsanordnung nach Fig. 1;
- Fig. 3: in einer schematischen Darstellung die erfindungsgemäße Schaltanordnung gemäß einer ersten Ausführungsform;
- Fig. 4: in einer schematischen Darstellung die erfindungsgemäße Schaltanordnung gemäß einer zweiten Ausführungsform;
- Fig. 5: in vereinfachter Darstellung die Schaltungsanordnung nach Fig. 4;
- Fig. 6: in rein schematischer Darstellung die erfindungsgemäße Ausgestaltung;
- Fig. 7: in schematischer Darstellung ein Blockschaltbild eines Frequenzumrichters nach dem Stand der Technik;
- Fig. 8: in schematischer Darstellung den Frequenzumrichter nach Fig. 7 mit integrierter Schutzschaltung.

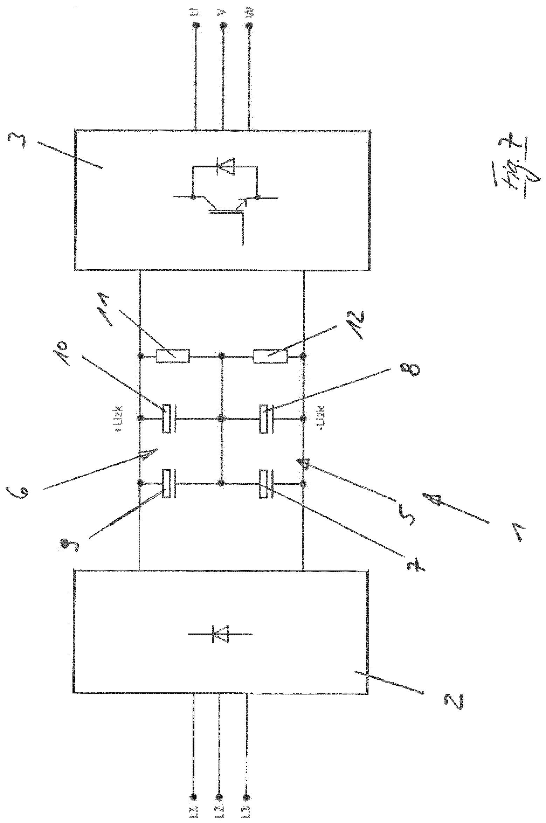

Figur 7 lässt in einem Blockschaltbild einen Frequenzumrichter 1 erkennen, wie er aus dem Stand der Technik an sich bekannt ist.

Der Frequenzumrichter 1 dient dem Betreiben einer in Figur 7 nicht näher dargestellten elektrischen Maschine, beispielsweise eines Motors, und verfügt über einen Gleichrichter 2 und einen Wechselrichter 3. Dabei sind der Gleichrichter 2 und der Wechselrichter 3 miteinander über einen Zwischenkreis 4 verschaltet.

Wie Figur 7 des Weiteren erkennen lässt, ist der Frequenzumrichter 1 stromeingangsseitig an die Phasen L1, L2 und L3 eines Versorgungsnetzes angeschlossen.

Der Zwischenkreis 4 des Frequenzumrichters 1 verfügt über zwei Zwischenkreiskondensatoreinheiten 5 und 6, die in Reihe geschaltet sind. Dabei weist im gezeigten Ausführungsbeispiel jede Zwischenkreiskondensatoreinheit 5 bzw. 6 zwei parallelgeschaltete Kondensatoren 7 und 8 bzw. 9 und 10 auf. Im Ergebnis sind zwei Kondensatorpfade gegeben, wobei die Kondensatoren 7 und 9 sowie die Kondensatoren 8 und 10 in Reihe geschaltet sind.

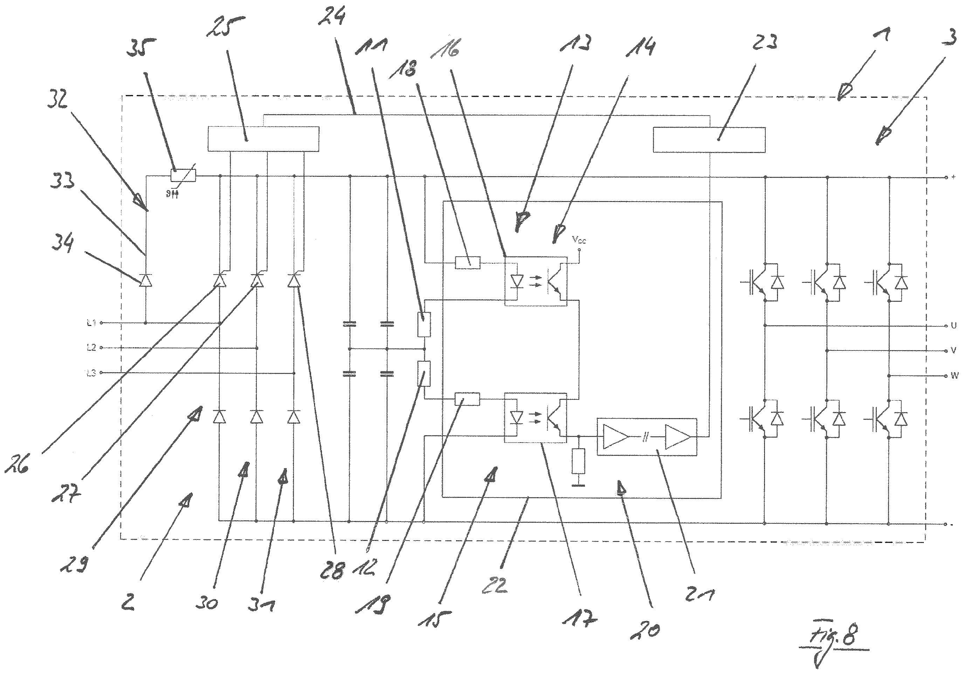

Bei den Kondensatoren 7, 8, 9 und 10 handelt es sich jeweils um Elektrolytkondensatoren, die im Überspannungsfall explosionsartig bersten können. Ein solches Bersten kann mittels einer entsprechenden Schutzschaltung in an sich aus dem Stand der Technik bekannter Weise verhindert werden. Einen Frequenzumrichter 1 mit einer beispielhaften Schutzschaltung zeigt Figur 8.

Die Schutzschaltung 13 nach Figur 8 verfügt je Zwischenkreiskondensatoreinheit 5 bzw. 6 über einen Symmetriewiderstand 12 bzw. 11, der zur zugehörigen Zwischenkreiskondensatoreinheit 5 bzw. 6 parallelgeschaltet ist. Demnach ist der Zwischenkreiskondensatoreinheit 6 der Symmetriewiderstand 11 und der Zwischenkreiskondensatoreinheit 5 der Symmetriewiderstand 12 zugeordnet, wie sich dies auch aus der Darstellung nach Figur 7 ergibt. Dabei dienen die Symmetriewiderstände 11 und 12 der Spannungssymmetrierung an den Zwischenkreiskondensatoreinheiten 5 und 6.

Je Zwischenkreiskondensatoreinheit 5 bzw. 6 ist des Weiteren eine Erfassungseinheit 14 bzw. 15 vorgesehen. Dabei verfügt jede Erfassungseinheit 14 bzw. 15 über einen Optokoppler 16 bzw. 17 und einen Widerstand 18 bzw. 19, die jeweils in Reihe mit dem Symmetriewiderstand 11 bzw. 12 der zugehörigen Zwischenkreiskondensatoreinheit 5 bzw. 6 geschaltet sind. Demnach ist der Zwischenkreiskondensatoreinheit 5 die Erfassungseinheit 15 zugeordnet, die in Reihe mit dem Symmetriewiderstand 12 geschaltet ist. Die Erfassungseinheit 14 ist der Zwischenkreiskondensatoreinheit 6 zugeordnet und dementsprechend mit dem Symmetriewiderstand 11 in Reihe geschaltet. Dieser Sachzusammenhang ergibt sich aus der Darstellung nach Figur 8.

Die vorbeschrieben Baukomponenten sind im gezeigten Ausführungsbeispiel von einer gemeinsame Karte 22 bereitgestellt.

Die Schutzschaltung 13 verfügt des Weiteren über eine Vergleichseinheit 20. Mittels dieser werden im Betriebsfall die an den Zwischenkreiskondensatoreinheiten 5 und 6 anliegenden Spannungen miteinander verglichen, wobei die Vergleichseinheit 20 im Falle einer festgestellten Spannungsasymmetrie mittels einer Signalverarbeitung 21 ein Steuersignal erzeugt, das an eine Steuerkarte 23 übergeben wird.

Der Gleichrichter 2 verfügt über drei Thyristoren 26, 27 und 28, die an die Phasen des Versorgungsnetzes angeschlossen sind. Dabei ist ein erster Thyristor 26 der Phase L1, ein zweiter Thyristor 27 der Phase L2 und ein dritter Thyristor 28 der Phase L3 zugeordnet. Die Thyristoren 26, 27 und 28 sind jeweils Teil einer Thyristoreneinheit 29, 30 und 31, die auch noch weitere Baukomponente, insbesondere Dioden aufweisen können.

Die Thyristoren 26, 27 und 28 stehen in Wirkverbindung mit einer Thyristorenansteuerung 25, die ihrerseits mittels einer Signalleitung 24 an die Steuerkarte 23 angeschlossen ist.

Wie sich aus der Darstellung nach Figur 8 ferner ergibt, ist eine Vorladeschaltung 32 vorgesehen, die im gezeigten Ausführungsbeispiel parallel zum ersten Thyristor 26 an Phase L1 des Versorgungsnetzes angeschlossen ist. Dabei verfügt die Vorladeschaltung 32 über einen Vorladezweig 33 sowie über eine Reihenschaltung aus einer Diode 34 und einem temperaturabhängigen Widerstand 35. Der temperaturabhängige Widerstand 35 wird infolge eines hohen Stromflusses erwärmt und bei hohen Temperaturen hochohmig. Anstelle nur eines Widerstandes 35 können auch mehrere in Reihe und/oder parallelgeschaltete Widerstände vorgesehen sein.

Die Funktionsweise der Schutzschaltung 13 ist die Folgende: Im bestimmungsgemäßen Betriebsfall sind die Thyristoren 26, 27 und 28 über die Thyristorenansteuerung 25 angesteuert, was einen Energiefluss, d. h. Stromfluss vom Versorgungsnetz über den Gleichrichter 2 in den Zwischenkreis 4 gestattet. Dabei haben bei voller Ansteuerung der Thyristoren 26, 27 und 28 die Diode 34 und der Widerstand 35 der Vorladeschaltung 32 eine vernachlässigbare Wirkung, da die Vorladeschaltung 32 parallel zum ersten Thyristor 26 geschaltet ist. Alternativ kann natürlich auch eine Parallelschaltung zum zweiten Thyristor 27 oder zum dritten Thyristor 28 vorgesehen sein.

Die Vorladeschaltung 32 übernimmt beim Einschalten des Frequenzumrichters 1 die Spannungs-Vorladung des Zwischenkreises 4. Erst bei hinreichender Spannungshöhe im Zwischenkreis 4 werden mittels der Thyristorenansteuerung 25 die Thyristoren 26, 27 und 28 eingeschaltet. Durch eine solche Vorladung werden größere Ströme im Versorgungsnetz beim Einschalten des Frequenzumrichters 1 verhindert.

Sollte es nun bei einer der beiden Zwischenkreiskondensatoreinheiten 5 oder 6 zu einem Kurzschluss kommen, so führt dies zu einer unzulässigen und zerstörenden Spannungsverdopplung an der anderen Zwischenkreiskondensatoreinheit 5 bzw. 6. Der Stromfluss in den Optokoppler 16 bzw. 17, der der Kurzschluss behafteten Zwischenkreiskondensatoreinheit 5 bzw. 6 zugeordnet ist, wird infolgedessen unterbunden. Damit schaltet der zugehörige Optokopplerausgang um und das Spannungssignal am Eingang der Signalverarbeitung 21 verändert sich. Dabei erkennt die Signalverarbeitung 21 diesen Wechsel und teilt der Steuerkarte 23 mit, dass sich die Spannungen an den Kondensatoreinheiten 5 und 6 nicht mehr im bestimmungsgemäßen Bereich befinden. Die Steuerkarte 23 gibt über die Leitung 24 ein entsprechendes Steuersignal an die Thyristorenansteuerung 25 ab, infolgedessen eine Abschaltung der Thyristoren 26, 27 und 28 durch die Thyristorenansteuerung 25 erfolgt. Sobald alle Thyristoren 26, 27 und 28 sperren, wird sich ein Stromfluss über den Vorladezweig 33, mithin über die Diode 34 und den Widerstand 35 einstellen. Da der Widerstand 35 ein temperaturabhängiger Widerstand, beispielsweise ein PTC-Glied ist, wird dieser bei großem Stromfluss hochohmig, welcher große Stromfluss im Fehlerfall eines Kurzschlusses einer Zwischenkreiskondensatoreinheit 5 bzw. 6 gegeben ist.

Sobald der Widerstand 35 hochohmig geworden ist, ist der Zwischenkreis 4 vom Versorgungsnetz getrennt. Es findet somit kein Energiefluss statt, weder über die Thyristoren 26, 27 und 28, noch über die Vorladeschaltung 32 in den Zwischenkreis 4. Die Zwischenkreiskondensatoreinheiten 5 und 6 sind so vor einer weiteren Zerstörung geschützt.

Die vorbeschriebene Schutzschaltung 13 ist nur als exemplarische Schutzschaltung zu verstehen. Die erfindungsgemäße Ausgestaltung, wie sie im Weiteren beschrieben werden wird, ist in ihrer Funktionsweise nicht auf die vorbeschriebene Schutzschaltung beschränkt. Es können auch andere Schutzschaltungen im Zusammenhang mit der erfindungsgemäßen Ausgestaltung genutzt werden. Von erfindungswesentlicher Bedeutung ist allein, dass zwischenkreisseitig eine Schutzschaltung vorgesehen ist, die im Falle eines detektierten Fehlers einen Stromfluss in den Zwischenkreis 4 durch Abschaltung des Gleichrichters 2 unterbindet. Es können insofern auch andere Schutzschaltungen vorgesehen sein, beispielsweise solche, die ein Stromabschalten zum Schutz eines vom Zwischenkreis 4 bereitgestellten Bremstransistors bewirken.

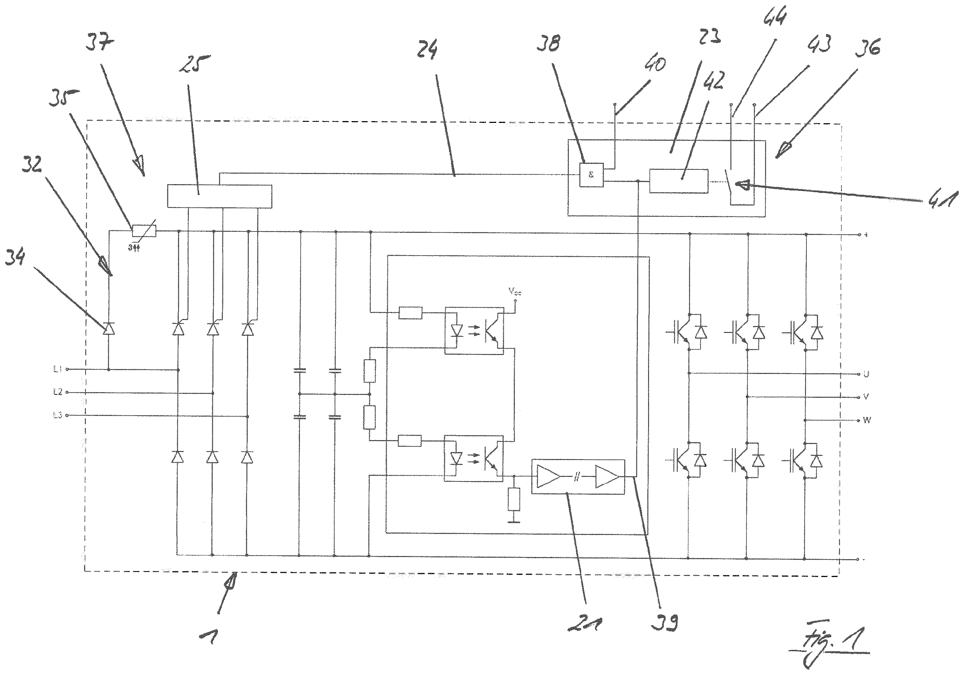

Figur 1 lässt es eine erfindungsgemäße Schaltungsanordnung erkennen. Diese verfügt über eine Abschaltvorrichtung 36, die im Falle eines mittels der Schutzschaltung 13 detektierten Fehlers im Zwischenkreis 4 eine sofortige Stromlosschaltung bewirkt. Die Abschaltvorrichtung 36 verfügt zu diesem Zweck über eine erste Schalteinrichtung 37 und eine zweite Schalteinrichtung 41.

Die erste Schalteinrichtung 37 verfügt über die Thyristorenansteuerung 25 und die Vorladeschaltung 32. Die zweite Schalteinrichtung 41 ist im gezeigten Ausführungsbeispiel als Relais ausgebildet. Dieses ist zwischen einen Eingang 43 und einen Ausgang 44 geschaltet und mittels einer Relaissteuerung 42 aktivierbar bzw. deaktivierbar.

Die Steuerkarte 23 umfasst ferner ein "und"-Gate, d. h. eine "und"-Verknüpfung 38, an der ein Freigabesignal 40 einerseits und ein Steuersignal 39 andererseits anliegen.

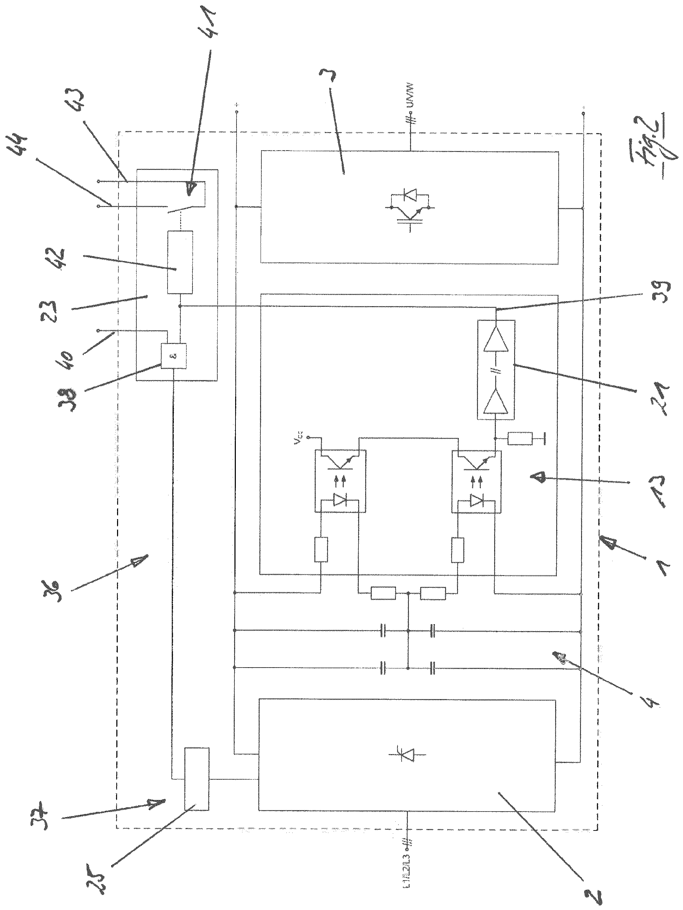

Die Darstellung nach Figur 1 ist in einer vereinfachten Darstellung ebenfalls in Figur 2 gezeigt.

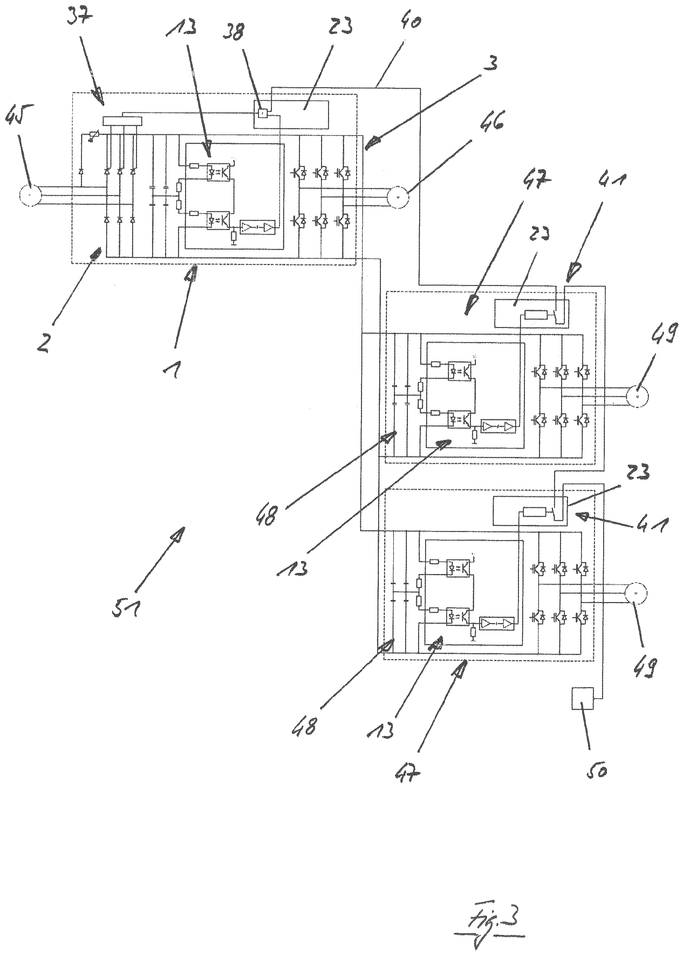

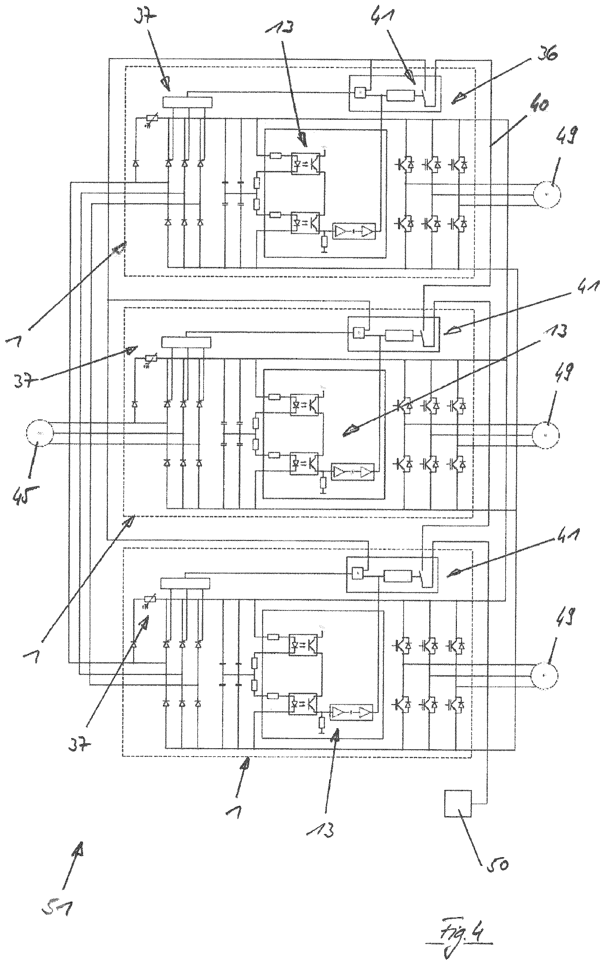

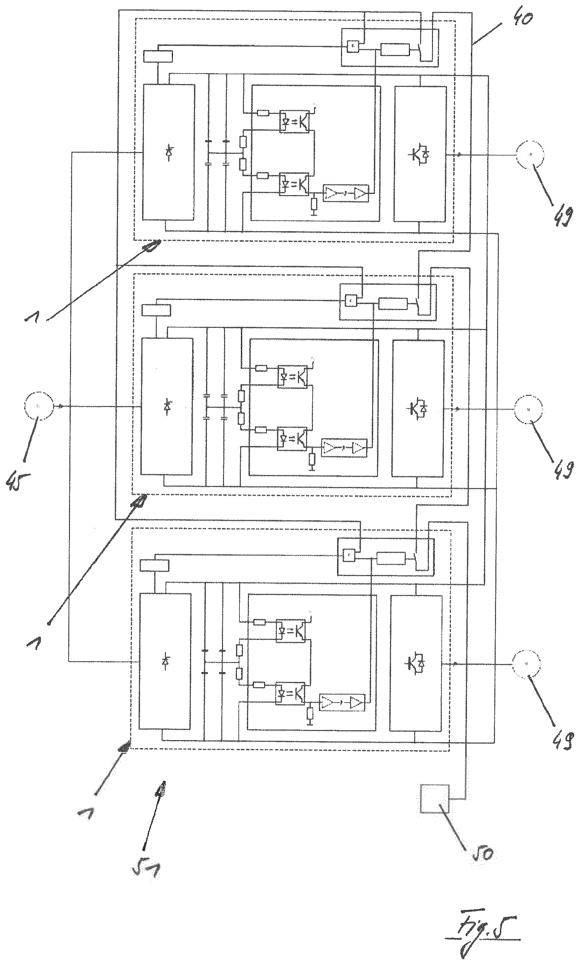

Die Funktionsweise der vorbeschriebenen Schaltungsanordnung ergibt sich aus den weiteren Figuren 3 bis 5, wobei Figur 3 eine erste Ausführungsform und die Figuren 4 und 5 eine zweite Ausführungsform zeigen.

Gemäß der Ausführungsform nach Figur 3 sind ein Frequenzumrichter 1 sowie mehrere Wechselrichter 47 samt zugehörigen Zwischenkreis 48 vorgesehen, wobei die Wechselrichter 47 zum Zwischenkreis 4 des Frequenzumrichters 1 parallelgeschaltet sind. Eine Versorgung sämtlicher Zwischenkreise 4 und 48 mit Energie erfolgt über den Gleichrichter 2, der an das Versorgungsnetz 45 angeschlossen ist. Der Wechselrichter 3 des Frequenzumrichters 1 sowie die Wechselrichter 47 sind jeweils an elektrischen Maschinen 46 bzw. 49 angeschlossen. In ihrer Kombination bilden der Frequenzumrichter 1 und die Wechselrichter 47 eine erfindungsgemäße Frequenzumrichter-Anordnung 51, d. h. einen DC-Verbund mit einer erfindungsgemäßen Schaltungsanordnung.

Die zweiten Schalteinrichtungen 41 der Wechselrichter 47 sind in Reihe mit einer Stromversorgung 50 in der Ausgestaltung einer Batterie oder eines Netzteils geschaltet. Die die zweiten Schalteinrichtungen 41 miteinander verbindende Leitung 40 stellt im Nichtdefektfall das Freigabesignal bereit, das an der "und"-Verknüpfung 38 der Steuerkarte 23 des Frequenzumrichters 1 anliegt.

Solange kein Fehlerfall in einem der Zwischenkreise vorliegt, sind das Freigabesignal 40 und das Steuersignal 39, die an der "und"-Verknüpfung 38 anliegen, auf "high", d. h. "1" geschaltet. Im Ergebnis findet eine bestimmungsgemäße Stromversorgung des Frequenzumrichters 1 aus dem Versorgungsnetz 45 statt.

Tritt im bestimmungsgemäßen Betriebsfall ein Fehler im Zwischenkreis 4 des Frequenzumrichters 1 auf, so sorgt die zugehörige Schutzschaltung 13 dafür, dass das an der "und"-Verknüpfung anliegende Steuersignal 39 auf "low" mit dem Ergebnis geschaltet wird, dass die erste Schalteinrichtung 37 der Abschaltvorrichtung 36 einen Stromfluss in den Gleichrichter 2 unterbricht. Dabei schaltet die erste Schalteinrichtung 37 mittels der Thyristorenansteuerung 25 die zugehörigen Thyristoren 26, 27 und 28 des Gleichrichters 2 ab und auch über die Vorladeschaltung 32 fließt aufgrund des Hochohmigwerdens des Widerstands 35 in schon vorbeschriebener Weise kein Strom mehr, sodass der Gleichrichter 2 insgesamt stromlos gestellt wird. In der Konsequenz werden weder der Zwischenkreis 4 noch die Zwischenkreise 48 der Wechselrichter 47 mit Strom versorgt. Obgleich also nur ein Fehler im Zwischenkreis 4 aufgetreten ist, wird ein Stromfluss in sämtliche Zwischenkreise 48 unterbunden.

Tritt indes in einem der Zwischenkreise 48 ein Fehler auf, so bewirkt die jeweils zugehörige Schutzschaltung 13 eine Schaltung der jeweils zugehörigen zweiten Schalteinrichtung 41. Im Falle eines Relais erfolgt dies durch die zugehörige Relaissteuerung 42, die das entsprechende Steuersignal 39 aus der zugehörigen Signalverarbeitung 41 erhält. Infolgedessen öffnet das Relais und das an der "und"-Verknüpfung 38 des Frequenzumrichters 1 anliegende Freigabesignal 40 wird von "high" auf "low" geschaltet. In der Konsequenz führt auch dies zu einer sofortigen Stromlosschaltung des Gleichrichters 2, sodass in der Konsequenz sämtliche Zwischenkreise 4 bzw. 48 stromlos geschaltet werden.

Eine alternative Ausführungsform der Erfindung zeigen die Figuren 4 und 5. Gemäß dieser Ausführungsform sind eine Mehrzahl von Frequenzumrichter 1 vorgesehen, die parallelgeschaltet sind und in Kombination eine erfindungsgemäße Frequenzumrichter-Anordnung 51 bilden, mithin einen DC-Verbund mit einer erfindungsgemäßen Schaltungsanordnung. Im Unterschied zum vorbeschriebenen Ausführungsbeispiel ist bei parallelgeschalteten Frequenzumrichtern 1 jedem Wechselrichter 3 ein eigener Gleichrichter 2 vorgeschaltet. Dementsprechend verfügt die Abschaltvorrichtung 36 je Frequenzumrichter 1 über eine "und"-Verknüpfung 38, an der jeweils sowohl ein Freigabesignal als auch ein Steuersignal anliegen. Wird mittels einer Schutzschaltung 13 im jeweils zugehörigen Zwischenkreis 4 ein Fehler detektiert, sorgt das von der zugehörigen Signalverarbeitung 21 abgegebene Steuersignal dafür, dass auch die jeweilige Relaissteuerung 42 angesteuert wird, sodass das zugehörige Relais öffnet, womit das Freigabesignal für sämtliche angeschlossene "und"-Verknüpfungen 38 auf "low" geschaltet wird. In der Konsequenz erfolgt eine Abschaltung sämtlicher Frequenzumrichter 1, auch wenn in nur einem Zwischenkreis 4 einer der Frequenzumrichter 1 ein Fehler detektiert worden ist.

Wie sich aus der vorstehenden Darstellung ergibt, erbringt die erfindungsgemäße Schaltungsanordnung insbesondere den Vorteil, dass im DC-Verbund parallelgeschaltete Wechselrichter unmittelbar und sofort stromlos gestellt werden, wenn in nur einem Zwischenkreis einer der Wechselrichter und/oder Frequenzumrichter ein Fehler detektiert wird.

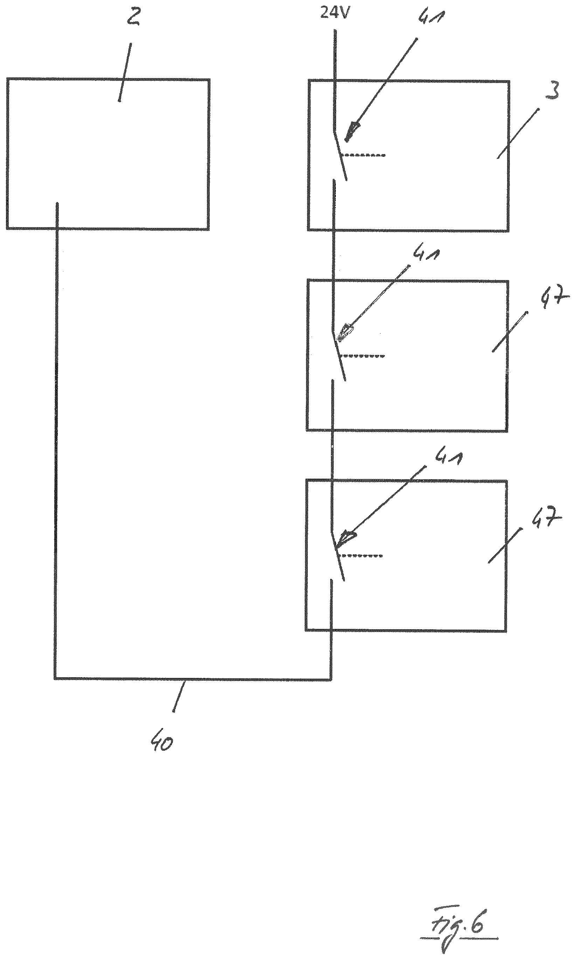

Figur 6 zeigt die erfindungsgemäße Ausgestaltung zusammenfassend in einer rein schematischen Darstellung.

Wie sich aus Figur 6 ergibt ist eine als Fehlerkette zu bezeichnende Reihenschaltung von zweiten Schalteinrichtungen 41 vorgesehen. Je Wechselrichter 3 bzw. 47 ist eine solche zweite Schalteinrichtung 41 vorgesehen, wobei die gemeinsame Leitung mit 24V Dauerstrom beaufschlagt ist. Die gemeinsame Leitung 40 ist beispielsweise an einen digitalen Eingang des Gleichrichters 2 angeschlossen. Kommt es nun in einem der den Wechselrichtern 3 bzw. 47 zugeordneten Zwischenkreise zu einem Fehler, so wird die Signalleitung von der zugehörigen zweiten Schalteinrichtung 41 aufgrund eines Signals der zwischenkreisseitigen Schutzschaltung unterbrochen, womit das am Gleichrichter 2 ansonsten anliegende Freigabesignal wegfällt. Dies führt dann in schon vorbeschriebener Weise zu einem Abschalten des Gleichrichters 2 und damit zum einem Stromlosschalten sämtlicher Zwischenkreise. Diese erfindungsgemäße Fehlerkette ist betriebswirtschaftlich umsetzbar, erlaubt auch eine Nachrüstung von bestehenden DC-Verbunden und ist hinreichend schnell, um einen sicheren Betrieb auch ohne zusätzliche wechselrichterseitige Sicherungen zu ermöglichen.

### Bezugszeichen

| | | | |
|---|---|---|---|
| | | 27 | Thyristor |
| 1 | Frequenzumrichter | 28 | Thyristor |
| 2 | Gleichrichter | 29 | Thyristoreinheit |
| 3 | Wechselrichter | 30 | Thyristoreinheit |
| 4 | Zwischenkreis | 31 | Thyristoreinheit |
| 5 | Zwischenkreiskondensatoreinheit | 32 | Vorladeschaltung |
| 6 | Zwischenkreiskondensatoreinheit | 33 | Vorladezweig |
| 7 | Kondensator | 34 | Diode |
| 8 | Kondensator | 35 | temperaturabhängiger Widerstand (PTC-Glied) |
| 9 | Kondensator | | |
| 10 | Kondensator | 36 | Abschaltvorrichtung |
| 11 | Symmetriewiderstand | 37 | erste Schalteinrichtung |
| 12 | Symmetriewiderstand | 38 | "und"-Verknüpfung ("und"-Gate) |
| 13 | Schutzschaltung | 39 | Leitung (Steuersignal) |
| 14 | Erfassungseinheit | 40 | Leitung (Freigabesignal) |
| 15 | Erfassungseinheit | 41 | zweite Schalteinrichtung |
| 16 | Optokoppler | 42 | Relaissteuerung |
| 17 | Optokoppler | 43 | Eingang |
| 18 | Widerstand | 44 | Ausgang |
| 19 | Widerstand | 45 | Versorgungsnetz |
| 20 | Vergleichseinheit | 46 | elektrische Maschine |
| 21 | Signalverarbeitung | 47 | Wechselrichter |
| 22 | Karte | 48 | Zwischenkreis |
| 23 | Steuerkarte | 49 | elektrische Maschine |
| 24 | Leitung | 50 | Stromversorgung (Batterie/Netzteil) |
| 25 | Thyristorenansteuerung | | |
| 26 | Thyristor | 51 | Frequenzumrichter-Anordnung |

## Patentansprüche

1. Schaltungsanordnung für einen DC-Verbund mit mehreren Wechselrichtern (3, 47) und einem oder mehreren Gleichrichter(n) (2), wobei jedem Wechselrichter (3, 47) ein Zwischenkreis (4, 48) zugeordnet ist, mit einer Mehrzahl von Schutzschaltungen (13), wobei je Zwischenkreis (4, 48) eine Schutzschaltung (13) vorgesehen ist, und mit einer Abschaltvorrichtung (36), die dazu ausgebildet ist, einen Stromfluss in die Zwischenkreise (4, 48) zu unterbrechen, wobei die Abschaltvorrichtung (36) gleichrichterseitig eine erste Schalteinrichtung (37) und wechselrichterseitig eine zweite Schalteinrichtung (41) aufweist, wobei die zweite Schalteinrichtung (41) dazu ausgebildet ist, eine Betätigung der ersten Schalteinrichtung (37) zu bewirken, und wobei die erste Schalteinrichtung (37) dazu ausgebildet ist, einen Stromfluss in die Zwischenkreise (4, 48) zu unterbrechen.

2. Schaltungsanordnung nach Anspruch 1, **dadurch gekennzeichnet, dass** die Abschaltvorrichtung (36) je Gleichrichter (2) eine erste Schalteinrichtung (37) aufweist, wobei ein Gleichrichter (2) über Thyristoren (26, 27, 28) und eine damit zusammenwirkende Thyristorenansteuerung (25) verfügt und wobei die erste Schalteinrichtung (37) eines Gleichrichters (2) die Thyristorenansteuerung (25) des Gleichrichters (2) und eine zu einem der Thyristoren (26, 27, 28) des Gleichrichters (2) parallel an dessen Phase geschaltete Vorladeschaltung (32) aufweist.

3. Schaltungsanordnung nach Anspruch 2, **dadurch gekennzeichnet, dass** die Vorladeschaltung (32) eine Diode (34) und einen hierzu in Reihe geschalteten temperaturabhängigen Widerstand (35), vorzugsweise ein PTC-Glied, aufweist.

4. Schaltungsanordnung nach Anspruch 2 oder 3, **dadurch gekennzeichnet, dass** an der Thyristorenansteuerung (25) einer ersten Schalteinrichtung (37) unter Zwischenschaltung einer "und"-Verknüpfung (38) ein externes Freigabesignal (40) sowie ein Steuersignal (39) anliegen.

5. Schaltungsanordnung nach Anspruch 4, **dadurch gekennzeichnet, dass** das Steuersignal (39) von der Schutzschaltung (13) des Zwischenkreises (4, 48) bereitgestellt ist, der dem Gleichrichter (2) zugeordnet ist, an dessen Thyristorenansteuerung (25) das Steuersignal (39) anliegt.

6. Schaltungsanordnung nach Anspruch 4 oder 5, **dadurch gekennzeichnet, dass** das Freigabesignal (40) von einem Signalgeber bereitgestellt ist.

7. Schaltungsanordnung nach Anspruch 6, **dadurch gekennzeichnet, dass** der Signalgeber eine Stromversorgung (50), vorzugsweise ein Akkumulator oder Netzteil, ist.

8. Schaltungsanordnung nach Anspruch 6 oder 7, **dadurch gekennzeichnet, dass** der Signalgeber unter Zwischenschaltung einer Signalleitung (40) an die "und"-Verknüpfung (38) einer ersten Schalteinrichtung (37) angeschlossen ist.

9. Schaltungsanordnung nach Anspruch 8, **dadurch gekennzeichnet, dass** in die Signalleitung (40) zweite Schalteinrichtungen (41) integriert sind.

10. Schaltungsanordnung nach einem der vorhergehenden Ansprüche, **dadurch gekennzeichnet, dass** die Abschaltvorrichtung (36) bei parallelgeschalteten Frequenzumrichtern (1) je Wechselrichter (3, 47) eine zweite Schalteinrichtung (41) aufweist.

11. Schaltungsanordnung nach einem der vorhergehenden Ansprüche 1 bis 9, **dadurch gekennzeichnet, dass** die Abschaltvorrichtung (36) bei zu einem Zwischenkreis eines Frequenzumrichters (1) parallelgeschalteten Wechselrichtern (47) je parallelgeschaltetem Wechselrichter (47) eine zweite Schalteinrichtung (41) aufweist.

12. Schaltungsanordnung nach Anspruch 10 oder 11, **dadurch gekennzeichnet, dass** eine zweiten Schalteinrichtung (41) ein Relais und eine Relaisansteuerung (42) aufweist.

13. Schaltungsanordnung nach Anspruch 12, **dadurch gekennzeichnet, dass** an einer Relaisansteuerung (42) ein Steuersignal (39) anliegt, wobei das Steuersignal (39) von der Schutzschaltung (13) des Zwischenkreises (4, 48) bereitgestellt ist, der dem Wechselrichter (3, 47) der Relaisansteuerung (42) zugeordnet ist.

14. Frequenzumrichter-Anordnung mit mehreren Wechselrichtern (3, 47) und einem oder mehreren Gleichrichter(n) (2), wobei jedem Wechselrichter (3, 47) ein Zwischenkreis (4, 48) zugeordnet ist, **gekennzeichnet durch** eine Schaltungsanordnung nach einem der vorhergehenden Ansprüche 1 bis 13.

15. Verfahren zur Stromlosschaltung einer Frequenzumrichter-Anordnung nach Anspruch 14, bei dem mittels einer Schutzschaltung (13) ein Fehler in einem der Zwischenkreise (4, 48) detektiert wird und bei dem alsdann mittels der Abschaltvorrichtung (36) ein Stromfluss in sämtliche Zwischenkreise (4, 48) unterbrochen wird.
